# EUROPÄISCHE PATENTSCHRIFT

(11) **EP 1 282 662 B1**
(45) Veröffentlichungstag und Bekanntmachung des Hinweises auf die Patenterteilung: **15.06.2005**
(21) Anmeldenummer: 00956127.5
(22) Anmeldetag: 05.08.2000
(51) Int. Cl.: C08L 3/02

(54) **THERMOPLASTICHE POLYMERMISCHUNG AUS THERMOPLASTICHER STÄRKE SOWIE VERFAHREN ZU DEREN HERSTELLUNG**
THERMOPLASTIC POLYMER BLEND PRODUCED FROM THERMOPLASTIC STARCH AND METHOD FOR THE PRODUCTION THEREOF
MELANGE DE POLYMERES THERMOPLASTIQUES PRODUIT A PARTIR D'AMIDON THERMOPLASTIQUE ET SON PROCEDE DE PRODUCTION

(30) Priorität: 06.08.1999 DE 19938672
(43) Veröffentlichungstag der Anmeldung: 12.02.2003
(73) Patentinhaber: BIOP Biopolymer Technologies AG, 01217 Dresden (DE)
(72) Erfinder: BERGER, Werner, D-01217 Dresden (DE); JEROMIN, Lutz, D-40723 Hilden (DE); OPITZ, Guntram, D-01279 Dresden (DE)
(74) Vertreter: Kailuweit, Frank, Dr. Dipl.-Ing.
(86) Internationale Anmeldenummer: PCT/DE2000/002661
(87) Internationale Veröffentlichungsnummer: WO 2001/010949

(56) Entgegenhaltungen:
- WO-A-99/25756

## Beschreibung

Die Erfindung betrifft ein thermoplastisches Polymer-Blend aus thermoplastischer Stärke sowie ein Verfahren zur Herstellung eines thermoplastisch verformharen, wasserformbeständigen, biologisch abbaubaren Polymerblends auf der Basis von nativer Stärke, synthetischen Polymeren, wie z. B. aliphatische Polyester, und deren Copolymere, Polyvinylacetat (PVAc), Polyvinylalkohol (PVOH) und anderen, vorzugsweise biologisch abbaubaren synthetischen Polymeren unter Zusatz einer Hydrolysekomponente auf PVAc-Basis sowie von Wasser oder/und niederen polyfunktionellen Alkoholen durch reaktive Extrusion, vorzugsweise in Doppelwellenextrudern. Das Reaktionsprodukt kann in Abhängigkeit von der Produktzusammensetzung auf konventionellen Thermoplast-Verarbeitungsmaschinen zu Spritzguß-, Tiefzieh- und Blasformteilen sowie Folien mit einstellbaren Gebrauchswerteigenschaften, z. B. Wasserformbeständigkeit und biologische Abbaubarkeit, verarbeitet werden. Das erfindungsgemäße Polymer-Blend wird auch für Faserrohstoffe sowie als Material für Schmelzebeschichtungen verwendet.

In den letzten Jahren sind zahlreiche Verfahren zur Herstellung und Verformung von thermoplastischer Stärke (TPS) allein oder in einer Polymermischung bzw. Polymerschmelze oder Polymerblend bekannt geworden. Diese Arbeiten wurden mit dem Ziel ausgeführt, neue bzw. erweiterte Einsatzfelder für nachwachsende Rohstoffe zu erschließen.

Es ist bekannt, die körnige Struktur nativer Stärke zuerst mit definierten Anteilen an Wasser oder/und niederen polyfunktionellen Alkoholen, wie Ethylenglykol, Propylenglykol, Glycerol, 1,3-Butandiol, Diglycerid, entsprechende Ether. aber auch Verbindungen wie Dimethylsulfoxid, Dimethylformamid, Dimethylharnstoff. Dimethylacetamid und/oder anderen Zusatzstoffen durch einen thermomechanischen Aufschluß zu thermoplastischem Material mit Hilfe von konventionellen Doppelwellenextrudern aufzuschließen.

Der Gebrauchswert des Stärkeextrudats und der aus ihm hergestellten Produkte ist gering. Insbesondere ist das Material stark hydrophil, altert während der Lagerung und weist Verarbeitungsschwierigkeiten auf. Deshalb werden synthetisch gewonnene wasserfeste Polymere, wie z. B. Polyethylen, Polypropylen oder aliphatische (CoPolyester, aliphatisch-aromatische Copolyester, Polyesteramide, Polyesterurethane, wasserfeste Stärke-/ Cellulosederivate und/oder deren Mischungen der Stärke zugemischt. Dabei tritt aber das Problem auf, daß die Verträglichkeit zwischen den Polymerkomponenten ungenügend ist. Außerdem werden die biologische Abbaubarkeit und auch die Kostenstruktur ungünstiger.

Der Stand der Technik ist umfassend im Schrifttum dokumentiert. Als Bezug sei auf die Publikation von R.F.T.Stepto et al. "Injection Moulding of Natural Hydrophilic Polymers in the Presence of Water" Chimia 41 (1987) Nr. 3, S. 76-81 und die dort zitierte Literatur sowie beispielhaft auf die Patente DE 4116404, EP 0327505, DE 4038732, US 5106890, US 5439953, DE 4117628, WO 94/04600, DE 4209095, DE 4122212, EP 0404723 oder EP 407350 hingewiesen.

In DE 40 32 732 wird im Extruder die mit Wasser und Glycerol plastifizierte Stärke mit vorwiegend Polyvinylacetat zu einer Polymermischung verarbeitet. Das Extrudat hat gegenüber TPS eine bessere Wasserresistenz. Bei höheren Stärkeanteilen färben sich das Extrudat bzw. aus ihm hergestellte Flaschen gelblich bis bräunlich. Der Stärkeeinsatz ist dadurch auf unter 50 % beschränkt.

Es wurde bereits eine neutrale bis leicht saure Komponente aus Polyvinylacetat und Wasserglas vorgeschlagen (DE 195 33 800), mit dem ein Polymergemisch aus Stärke und einem hydrophoben Polymer, z. B. Polyvinylacetat, extrudiert werden kann. Die Komponente wird aus Wasserglas und Polyvinylacetat im Extrusions-Prozeß bei intensiver Durchmischung hergestellt. Gegebenenfalls wird Essigsäure hinzugesetzt, um noch nicht umgesetztes Wasserglas nach der Verseifung von PVAc mit Wasserglas zu neutralisieren. Es wurde gefunden, daß bereits geringe Zusätze dieser Komponente eine erhebliche qualitative Verbesserung des Extrudats und der aus ihm hergestellten Erzeugnisse ergibt. Ohne oder nur mit geringer Verfärbung und bei Beibehaltung bzw.

Verbesserung der Wasserformbeständigkeit kann gegenüber dem Stand der Technik erheblich mehr native Stärke eingesetzt werden. Offensichtlich trägt die Komponente dazu bei, daß die beiden an sich mischungsunverträglichen Phasen, die hydrophile thermoplastische Stärke und das hydrophobe Polymer, bis zu einem gewissen Grad mischbar werden.

Weitere Versuche haben gezeigt, daß die Qualität der Endprodukte hinsichtlich der Wasserformbeständigkeit und Festigkeit noch weiter verbessert werden muß. Insbesondere war es auch nicht möglich, dünne Folien unter 300 µm Dicke herzustellen.

Es wurde auch bereits vorgeschlagen (DE 197 50 846), eine Komponente aus Polyvinylacetat und Alkali-Wasserglas herzustellen, und diese Komponente zusammen mit Stärke und einem hydrophoben Polymer, zum Beispiel Polyvinylacetat, zu einem qualitativ hochwertigeren Polymergemisch zu extrudieren. Zur Herstellung der Komponente wurde Polyvinylacetat in Gegenwart katalytischer Zusätze von niedermolekularen, organischen Mono-, Di- und Trihydroxylverbindungen (z.B. Methanol, Ethanol, Ethylenglycol, Glyzerin) und unter kontinuierlicher Zugabe von basisch reagierenden Verbindungen und des Alkali-Silikats im Batch - Prozeß bis zu 90 % Hydrolisierungsgrad verseift.

Es hat sich gezeigt, daß mit dieser Komponente, die offensichtlich als Verträglichkeitsvermittler wirkt, Polymergemische mit hohen Stärkeanteilen analog zu DE 195 33 800 extrudiert werden können. Die aus diesen Polymergemischen hergestellten Produkte haben in mehreren Parametern eine deutlich höhere Qualität. Insbesondere können Folien mit einer Dicke von unter 100 µm hergestellt werden.

Ausgehend von den ökologischen Zielen, nachwachsende Rohstoffe noch stärker zu nutzen und umweltverträgliche Produkte wirtschaftlich herzustellen, ist es Aufgabe der Erfindung, ein Polymer-Blend auf Basis thermoplastischer Stärke mit verbesserten Eigenschaften zu schaffen.

Erfindungsgemäß wird die Aufgabe durch ein thermoplastisches Polymer-Blend mit einer bikontinuierlichen Phasenstruktur aus thermoplastischer Stärke. mindestens einem synthetischen Polymer und einer Hydrolysekomponente auf PVAc-Basis gelöst, das so hergestellt wird, daß eine Mischung von nativer Stärke und wenigstens einem hydrophoben Polymer unter Zusatz einer hydrolisierten Komponente auf Polyvinylacetat-Basis und von niederen polyfunktionellen Alkoholen oder/und Wasser in Gegenwart eines aciden Katalysators extrudiert wird. Im weiteren enthält des thermoplastische Polymer-Blend Streckmittel Füllstoffe, Gleitmittel, Fließmittel, Farbstoff, Pigmente oder Mischungen davon.

Bezogen auf die Gesammtzusammensetzung enthält das thermoplastische Polymer-Blend 30-70 Gew.% thermoplastieche Stärke, 20-40 Gew.% synthetisches Polymer and 6.25 Gew.% Hydrolysekomponente auf PUAc. Basis und gegebenenfalls eine acide Katalysator komponente. Das synthetische Polymer ist ein biologisch abbaubarer aliphatischer Polyester oder deren Copolymere oder Polyvinylacetat oder deren Copolymere oder eine Wasserfestes Stärkederivat oder Cellulosederivat oder Polyvinylalkohol oder deren Copolymere oder eine wasserfestes Stärke- oder Cellulosederivat.

Als acider Katalysator können Organometallverbindungen, wie Dibutylzinnoxid, Dibutylzinndilaurat, Tetra-2-ethylhexyltitanat, Triethanolyaminzirkonat, mit Milchsäure chelatisierte Titanat-Verbindung, Triethanolamintitanat oder/und Alkyltitanate, Lewissäure (wie z. B. Triphenylphosphit) in Mengen von 0,5 bis 2 %, bezogen auf das Gesamtgewicht der Mischung, oder Säuren, wie Salpetersäure, Schwefelsäure, Salzsäure oder/und p-Toluolsulfonsäure. in Mengen son 0,05 bis 0,2%, bezogen auf das Gesamtgewicht der Mischung, verwendet werden.

Zur Herstellung der hydrolysierten Komponente wird das Polyvinylacetat auf einen Hydrolysegrad von 20 bis 70% verseift.

Gefunden wurde, daß eine nur geringe Zugabe eines oder mehrerer der vorgenannten aciden Katalysatoren offensichtlich eine rasch ablaufende Umesterungs- bzw. Vernetzungsreaktion von Stärke, Hydrolysekomponente auf PVAc-Basis und Polymer und synthetischem Polymer in Gegenwart von Wasser fördert. Durch diese an sich entgegen aller Erwartung im Scherfeld des Extruders ablaufende Reaktion, kann mit relativ viel Feuchtigkeit in der Mischung gearbeitet werden. Eine vorherige energieaufwendige Trocknung ist nicht erforderlich. Außerdem hat sich gezeigt, daß durch den Zusatz des Katalysators die rheologischen Eigenschaften der Mischung in gewissen Grenzen einstellbar sind. Dadurch kann die Viskosität der Polymere besser angeglichen werden. Es können reproduzierbar gute Verarbeitungsbedingungen im Extruder eingestellt werden.

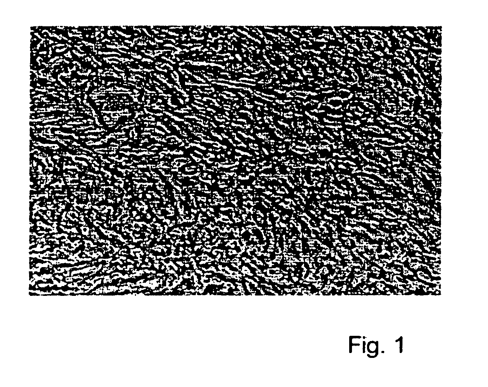

Unter den erfindungsgemäßen Verarbeitungsbedingungen gelingt es, eine bikontinuierliche Phasenmorphologie des Systems einzustellen und stabil zu halten. Fig. 1 zeigt eine lichtmikroskopische Aufnahme (Phasenkontrastmikroskopie) eines erfindungsgemäß hergestellten TPS-Bionolle®-Blends. Ersichtlich ist die Bikontinuität der dunklen und hellen Phase, die stabil erhalten bleibt.

Die bikontinuierliche Phasenmorphologie des erfindungsgemäßen Polymer-Blends besitzt eine breitere Vielfalt im Eigenschaftsprofil (z. Bsp. größere Anteile an Stärke, bessere Zugänglichkeit für den biologischen Abbau, Einstellung der Permeationseigenschaften) als Systeme mit Insel-/Matrix-Strukturen (siehe L. A. Utracki, Polymer alloys and Blends: Thermodynamics and Rheology, München, Wien, New York, Hanser Publishers 1989 bzw. Handbuch der technischen Polymerchemie, VCH Verlag Chemie, Weinheim, New York, Basel, Cambridge, Tokyo). Transparente Filme sind bei sehr feinen Dispersionen (Teilchendurchmesser < 100 nm) möglich, bei denen eine ausgedehnte Phasenseparation nicht stattfindet. Die bikontinuierliche Phasenstruktur hat auch den Vorteil, dass die hydrophoben Eigenschaften der synthetischen Polymerkomponente auch bei einem relativ geringen Anteil an der Gesamtmischung auf den Werkstoff insgesamt übertragen werden. Gleichzeitig bleiben aber auch die Eigenschaften der thermoplastischen Stärke, wie hohe mechanische Festigkeit, geringe Sauerstoffpermeabilität, schnelle biologische Abbaubarkeit erhalten.

Eine auf einen Hydrolysegrad von vorzugsweise 30 bis 55 % teilverseifte PVAc-Komponente hat ebenfalls einen signifikanten Einfluß auf die Phasenstabilität der Polymermischung. Insbesondere für die Herstellung dünner Folien sollte vorzugsweise eine wäßrige PVAc-Dispersion mit NaOH bei 120 bis 140°C verseift und durch anschließendes Zentrifugieren unter weitgehendem Entfernen der Nebenprodukte auf eine Restfeuchte von 15 - 35 % eingestellt werden. Eine höhere Restfeuchte erhöht die Wasseraufnahme der Polymermischung.

Bei verschiedenen erfindungsgemäßen Polymermischungen (z. B. gemäß Beispiele 8 und 11 der am Ende der Ausführungsbeispiele beigelegten Tabelle) wurde, ein MFI (melt flow index) von 5 bis 10 min bei einer Temperatur von 130°C und 5 kg Belastung gemessen. Dieser Wert weist auf die gute rheologische Verträglichkeit der Komponenten und Phasenstabilität des Systems hin.

Das Fließverhalten der Schmelze des erfindungsgemäßen Polymerblends nähert sich der reiner Polymerschmelzen. Überraschend wurde gefunden, dass die erfindungsgemäßen Polymerblends bei 130°C eine höhere Schmelzviskosität aufweisen als katalysatorfrei hergestellte Mischungen. Dies wird als Indiz für die Änderung der molekularen Struktur in Richtung einer größeren Homogenität der erfindungsgemäßen Polymerblends gesehen. Trotz der Gegenwart von Wasser und dem sauren Medium findet ein Molekulargewichtsabbau der Stärke nur geringfügig statt.

Dazu wurden die Molmassen Mw der Stärkekomponenten von thermoplastischer Stärke (TPS) und verschiedener Polymermischungen mit TPS nach Extrahieren mit DMSO über GPC-MALLS gemessen und mit der Molmasse nativer Kartoffelstärke sowie mit einem im Handel erhältlichen Stärkeblend "MaterBi®" der Fa. Novamont verglichen.

| Nr. | TPS bzw. Polymermischung | Mw in 10⁶ g/mol |
|---|---|---|
| 1 | TPS | 13,2 |
| 2 | TPS + Katalysator (0,1 % HNO₃) | 4,0 |
| 3 | TPS + Katalysator (0,15 % HNO₃) | 1,4 |
| 4 | TPS + teilverseiftes PVAc (etwa 1 : 1) | 24,9 |
| 5 | TPS + teilverseiftes PVAc (etwa 1 : 1) + Katalysator (0,1 % HNO₃) | 25,2 |
| 6 | TPS + teilverseiftes PVAc + Bionolle® (etwa 1/3 : 1/3 : 1/3) + Katalysator (0,1 % HNO₃) | 23,7 |
| 7 | Native Kartoffelstärke | 40 |
| 8 | MaterBi® | 0,4 |

Wie im Vergleich der Werte 1, 2 und 3 leicht zu erkennen, übt der Katalysator einen negativen Einfluß auf die Molmasse aus. Er baut die Molmasse von TPS stark ab. Andererseits geht aus den Werten 1 und 4 hervor, daß die hydrolisierte Komponente auf PVAc-Basis die Molmasse in der Mischung mit TPS erhöht. In dieser Mischung baut der acide Katalysator die Molmasse nicht mehr ab (Wert 5). Offensichtlich wirkt die hydrolisierte Komponente als Verträglichkeitsvermittler. Eine Wirkung, die auf besondere Eigenschaften der hydrolisierten Komponente zurückgeführt werden muß, denn die Molmasse wird durch das Hinzufügen einer weiteren synthetischen Komponente, wie z. Bsp. Bionolle® (aliphatischer Copolyester der Fa. Showa Denko, Poly(butylensuccinat-co-adipat)), nicht weiter erhöht (Wert 6). In der Kombination mit dem Verträglichkeitsvermittler können die oben genannten vorteilhaften Wirkungen des aciden Katalysators ohne Nachteile hinsichtlich eines zu starken Abbaus der Molmasse genutzt werden. Wie in den Beispielen noch gezeigt wird, haben die aus den Polymermischungen extrudierten Folien sehr gute Festigkeitswerte. Dabei ist aus dem Vergleich der Werte, insbesondere 2, 4 und 5, sogar ein synergistischer Effekt von acidem Katalysator und Verträglichkeitsvermittler erkennbar.

Als Polymerkomponente kommen verschiedene aliphatische Polyester, und deren Copolymere, Polyvinylacetat (PVAc) und deren Copolymere, Polyvinylalkohol (PVOH) und deren Copolymere, wasserfeste Stärke- und Cellulosederivate sowie andere, vorzugsweise biologisch abbaubare, synthetische Polymere zum Einsatz.

Offensichtlich ist auf die Kombination der Zusätze von acidem Katalysator und hydrolisierter PVAc-Komponente auch zurückzuführen, daß zum einen, wie in den Ausführungsbeispielen näher gezeigt, aus der Polymermischung sehr dünne Folien gezogen und zum anderen in den Mischungen für Spritzgußprodukte ein hoher Stärkeanteil eingearbeitet werden kann. Gut geeignete Spritzgußgranulate wurden aus 65 - 75 % Stärke, 5 - 10 % Verträglichkeitsvermittler, dem aciden Katalysator sowie Rest Bionolle® hergestellt.

Die native Stärke, die hydrolisierte Komponente auf PVAc-Basis und der Katalysator können zu einer gut fließenden Pulvermischung vermengt werden. Es ist aber auch möglich, den Katalysator vermischt mit Glycerin oder einem anderen polyfunktionellen Alkohol flüssig zu dosieren.

Der Pulvermischung sollte zur Verbesserung ihrer Fließfähigkeit vorzugsweise ca. 1 % gefüllte Kieselsäure zugesetzt werden. Durch einen vorzugsweisen Zusatz von ca. 1 % Stearinsäure zur Pulvermischung wird die Verarbeitbarkeit im Extruder verbessert.

Je nach Anwendung des Granulates variieren die Anteile der Stärke, des Verträglichkeitsvermittlers und des synthetischen Polymers.

Die Erfindung wird nachfolgend an mehreren **Ausführungsbeispielen** näher dargestellt:

In der angefügten Tabelle sind die Rezepturen und die Ergebnisse verschiedener Versuche zusammengefaßt. Es soll die Wirkung des Katalysators und speziell die Katalysatorwirkung in Kombination mit der hydrolisierten Komponente auf PVAc-Basis in Gegenüberstellung belegt werden.

Allen Beispielen gemeinsam ist, daß native Stärke mit 16 bis 20 % Feuchtigkeit und die hydrolisiertc Komponente zusammen mit etwa je 1% Stearinsäure und gefällter Kieselsäure in einem Schnellmischer zu einer gut fließenden Pulvermischung vermengt werden. Diese Pulvermischung und über separate Dosiereinrichtungen Bionolle® sowie Glycerin werden in einen gleichlaufenden. dichtkämmenden Doppelschneckenextruder (Hersteller: Berstorff ZE25, L/D = 32) aufgegeben. Der Gesamtmassedurchsatz beträgt 2,5 kg/h. Das Temperaturprofil entlang der Extrusionsstrecke gewährleistet, daß das Extrusionsgut durch thermischen und mechanischen Energieeintrag auf mindestens 180 °C erwärmt und anschließend gekühlt wird. Das Extrudat verläßt den Extruder durch eine Rundstrangdüse mit einer Temperatur von ca. 100 °C und kann nach anschließender Luftkühlung granuliert werden. Das Granulat hat eine für die Weiterverarbeitung notwendige Restfeuchte von 6-10 Gew% (gravimetrische Bestimmung, IR-Trocknung bei 120°C, 15 min Trocknung).

Das Granulat ist geeignet zur Weiterverarbeitung zu Schlauchfolien. Dazu wird es mit dem o.g. Extruder bei einer maximalen Zylindertemperatur von 130 °C reextrudiert und durch eine Ringdüse (Durchmesser 25 mm) zu einem Schlauch verformt. Dieser wird auf den zwei- bis dreifachen Durchmesser aufgeblasen. Außerdem wurden zum Vergleich zwei Beispiele mit gezogenen Flachfolien in die Tabelle aufgenommen.

Die Qualität des Stärke-Polymer-Blends wird anhand der Wasserbeständigkeit und der Zugfestigkeit entsprechend nachfolgender Vorschriften bestimmt:

Strangproben von etwa 2 cm Länge werden 24 h im Wasser bei Raumtemperatur gelagert, danach wird das Oberflächenwasser mit Filterpapier entfernt und die Proben zur Ermittlung des Wasseraufnahmevermögens (Quellbarkeit) ausgewogen. Diese Proben werden anschließend 8 h bei 90 °C im Wärmeschrank getrocknet und ausgewogen. Unter Berücksichtigung des Feuchtegehaltes der ursprünglichen Proben, der an gleichzeitig getrockneten,ungequollenen Vergleichsproben ermittelt wird, kann der Masseverlust und damit der in kaltem Wasser lösliche Produktanteil bestimmt werden.

Für die Zugprüfungen werden Probekörper in der Form eines Schulterstabes aus der Folie in Extrusionsrichtung ausgestanzt und 48 h in einer Atmosphäre, die sich in einem geschlossenen Gefäß oberhalb einer 80 %igen Glycerin/Wassermischung bei Raumtemperatur einstellt, konditioniert.

Die Zugprüfung erfolgt mit einer ZWICK - Universalprüfmaschine (ZWICKI 1120) entsprechend der DIN 53 455. Zur Auswertung werden die Zugspannung beim Bruch, die Bruchdehnung und der E-Modul genutzt.

Die hydrolisierte Komponente wird durch Verseifung einer wässrigen Polyvinylacetat-Dispersion mit NaOH bei 120 - 140°C hergestellt.

Der Mischung werden 12,5 % Glycerin, bezogen auf das Gesamtgewicht zugegeben. Die Prozentsätze der Komponente und von Bionolle® sind in der nachfolgenden Tabelle enthalten. Die Angaben sind auf 100 Gew.-% der Mischung ohne Glycerin bezogen. Der Anteil der nativen Stärke errechnet sich aus der Differenz zu 100 % (ebenfalls ohne Glycerin).

Aus der Tabelle ist zu erkennen, daß Blasfolien mit geringer Dicke (ca. 30 µm) herstellbar sind. Bei allen Versuchen wurde festgestellt. daß die Verarbeitungseigenschaften wesentlich verbessert waren. Die mechanischen Eigenschaften der Folien, erhöhte Zugfestigkeit, Dehnbarkeit, sind deutlich verbessert.

Nach einem weiteren Ausführungsbeispiel wurden mit einem gleichlaufenden Doppelschneckenextruder native Stärke, Glycerin als Weichmacher für die Stärke, die Hydrolysekomponente auf PVAc-Basis und ein Stärkeacetat/PEG-Blend Sconacell® A in Gegenwart unter Zusatz eines sauren Katalysators (HNO₃) extrudiert. Das erhaltene Polymer-Blend wurde reextrudiert und zu Schlauchfolien verarbeitet.

In nachfolgender Tabelle sind Eigenschaften der hergestellten Schlauchfolie einmal mit und einmal ohne Katalysatoreinsatz gegenübergestellt:

| **Bsp.** | **Verträglichkeits vermittler (%)** | **Sconacell A (%)** | **Katalysator** | **-anteil (%)** | **Dicke (µm)** | **ρ**_{**max**} **(MPa)** | **ε**_{**max**} **(%)** | **Zugmodul (MPa)** |
|---|---|---|---|---|---|---|---|---|
| 15 | 33,5 | 30 | - | - | 80-110 | 11,1 | 10 | 1323 |
| 16 | 33,5 | 30 | HNO₃ | 0,1 | 60-80 | 14,9 | 7 | 1530 |

Ersichtlich ist, daß die Zugfestigkeiten der Folien erhöht werden, wenn im ersten Extrusionsschritt ein saurer Katalysator zugesetzt wird.

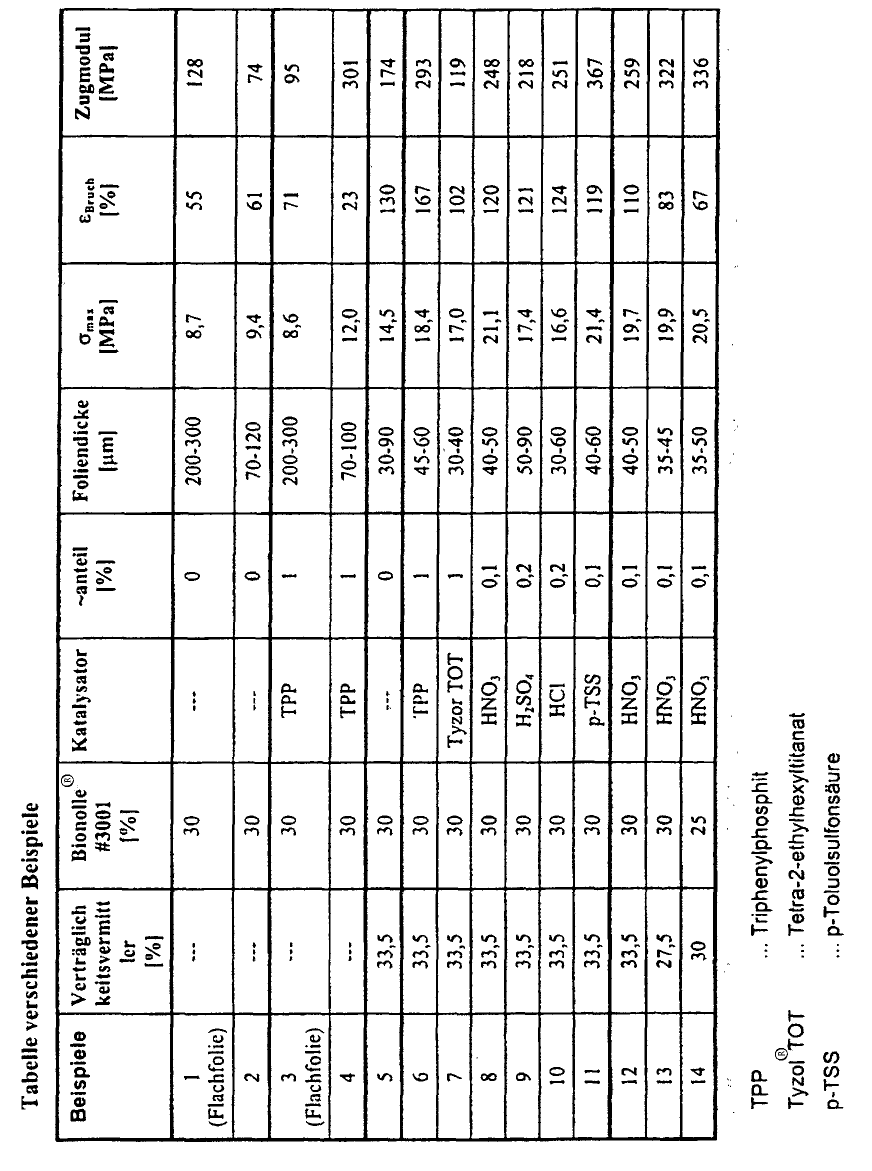

## Patentansprüche

1. Thermoplastisches Polymer-Blend mit einer bikontinuierlichen Phasenstruktur aus thermoplastischer Stärke, mindestens einem synthetischen Polymer und einer Hydrolysekomponente auf PVAc-Basis, erhältlich durch reaktive Extrusion einer Mischung von nativer Stärke und wenigstens einem hydrophoben Polymer unter Zusatz einer hydrolysierten Komponente auf Polyvinylacetat-Basis und von Ethylenglykol, Propylenglykol, Glycerol, 1,3-Butandiol oder/und Wasser in Gegenwart eines aciden Katalysators.

2. Thermoplastisches Polymer-Blend nach Anspruch 1, **dadurch gekennzeichnet, daß** es im weiteren Streckmittel, Füllstoffe, Gleitmittel, Fließmittel, Farbstoff, Pigmente oder Mischungen davon enthält

3. Thermoplastisches Polymer-Blend nach Anspruch 1 oder 2, **dadurch gekennzeichnet, daß** es bezogen auf die Gesamtzusammensetzung 30-70 Gew% thermoplastische Stärke, 20-40Gew% synthetisches Polymer und 6-25 Gew% Hydrolysekomponente auf PVAc-Basis und gegebenenfalls eine acide Katalysatorkomponente enthält.

4. Thermoplastisches Polymer-Blend nach Anspruch 1, wobei das synthetische Polymer ein biologisch abbaubarer aliphatischer Polyester oder deren Copolymere oder Polyvinylacetat oder deren Copolymere oder ein wasserfestes Stärkederivat oder Cellulosederivat oder Polyvinylalkohol oder deren Copolymere oder ein wasserfestes Stärke- oder Cellulosederivat ist.

5. Verfahren zur Herstellung eines thermoplastischen Polymerblends durch reaktive Extrusion einer Mischung von nativer Stärke und wenigstens einem hydrophoben Polymer unter Zusatz einer hydrolysierten Komponente auf Polyvinylacetat-Basis und von Ethylenglykol, Propylenglykol, Glycerol, 1,3-Butandiol oder/und Wasser, **dadurch gekennzeichnet, daß** die Mischung in Gegenwart eines aciden Katalysators extrudiert wird.

6. Verfahren nach Anspruch 5, **dadurch gekennzeichnet, daß** der acide Katalysator eine Organometallverbindung, wie Dibutylzinnoxid, Dibutylzinndilaurat, Tetra-2-ethylhexyltitanat, Triethanolaminzirkonat, mit Milchsäure chelatisierte Titanat-Verbindung, Triethanolannintitauat oder/und Alkyltitanate, ist.

7. Verfahren nach Anspruch 5, **dadurch gekennzeichnet, daß** der acide Katalysator eine Lewissäure (wie z. B. Triphenylphosphit) ist.

8. Verfahren nach Anspruch 6 oder 7, **dadurch gekennzeichnet, daß** die Mischung 0,5 bis 2 % des aciden Katalysators, bezogen auf ihr Gesamtgewicht, enthält.

9. Verfahren nach Anspruch 5, **dadurch gekennzeichnet, daß** der acide Katalysator eine Säure, wie Salpetersäure, Schwefelsäure, Salzsäure oder/und p-Toluolsulfonsäure, ist.

10. Verfahren nach Anspruch 9, **dadurch gekennzeichnet, daß** die Mischung 0,05 bis 0,2 % des aciden Katalysators, bezogen auf ihr Gesamtgewicht, enthält.

11. Verfahren nach Anspruch 5, **dadurch gekennzeichnet, daß** zur Herstellung der hydrolisierten Komponente das Polyvinylacetat auf einen Hydrolysegrad von 20 bis 70 % verseift wird.

12. Verfahren nach Anspruch 11, **dadurch gekennzeichnet, daß** das Polyvinylacetat auf einen Hydrolysegrad von 30 % bis 55 % verseift wird.

13. Verfahren nach Anspruch 11, **dadurch gekennzeichnet, daß** eine wäßrige Polyvinylacetat-Dispersion mit Natronlauge bei 120 - 140°C verseift wird.

14. Verfahren nach Anspruch 11, **dadurch gekennzeichnet, daß** die hydrolysierte Komponente auf Polyvinylacetat-Basis auf einen Restfeuchtegehalt von 15 - 35 % eingestellt wird.

15. Verfahren nach Anspruch 5, **dadurch gekennzeichnet, daß** die native Stärke, die hydrolysierte Komponente auf Polyvinylacetat-Basis und der Katalysator zu einer gut fließenden Pulvermischung vermengt werden.

16. Verfahren nach Anspruch 15, **dadurch gekennzeichnet, daß** der Pulvermischung ca. 1 % Stearinsäure, bezogen auf ihr Gesamtgewicht, zugesetzt wird.

17. Verfahren nach Anspruch 15, **dadurch gekennzeichnet, daß** der Pulvermischung ca. 1 % gefällte Kieselsäure, bezogen auf ihr Gesamtgewicht, zugesetzt wird.

18. Verfahren nach Anspruch 11, **dadurch gekennzeichnet, daß** der Katalysator vermischt mit dem Glycerin flüssig dosiert wird.

19. Verwendung eines thermoplastischen Polymer-Blends nach jeweils einem der Ansprüche 1 bis 18 für die Herstellung von Spritzguß-, Tiefzieh- oder Blasformteilen, Folien oder Faserrohstoffen sowie als Material für Schmeizebeschichtungen.

## Claims

1. Thermoplastic polymer blend with a bi-continuous phase structure of thermoplastic starch, at least one synthetic polymer and a hydrolysis component on PVAc base, obtainable by reactive extrusion of a mixture of native starch and at least one hydrophobic polymer while adding a hydrolyzed component on polyvinyl acetate base and of ethylene glycol, propylene glycol, glycerol, 1.3-butane diol or/and water in the presence of an acidic catalyst.

2. Thermoplastic polymer blend to claim 1 **characterized in that**, further, it contains extenders, fillers, lubricants, fluidizers, colorants, pigments or mixtures thereof.

3. Thermoplastic polymer blend to claim 1 or 2 **characterized in that** it contains, in relation to the total composition, 30-70 wt-% thermoplastic starch, 20-40 wt-% synthetic polymer and 6-25 wt-% hydrolysis component on PVAc base and, possibly, an acidic catalyst component.

4. Thermoplastic polymer blend to claim 1 whereby the synthetic polymer is a biodegradable aliphatic polyester or the copolymers thereof or polyvinyl acetate or the copolymers thereof or a water-resistant starch derivative or cellulose derivative or polyvinyl alcohol or the copolymers thereof or a water-resistant starch- or cellulose derivative.

5. Process for the production of a thermoplastic polymer blend by reactive extrusion of a mixture of native starch and at least one hydrophobic polymer by adding a hydrolyzed component on polyvinyl acetate base and of ethylene glycol, propylene glycol, glycerol, 1.3-butane diol or/and water **characterized in that** the mixture is extruded in the presence of an acidic catalyst.

6. Process to claim 5 **characterized in that** the acidic catalyst is an organometallic compound such as dibutyl stannic oxide, dibutyl stannic dilaurate, tetra-2-ethylhexyl titanate, triethanolamin zirconate, a titanate compound chelated by lactic acid, triethanolamin titanate or/and alcyl titanates.

7. Process to claim 5 **characterized in that** the acidic catalyst is a Lewis acid (such as triphenyl phosphite).

8. Process to claim 6 or 7 **characterized in that** the mixture, in relation to its total weight, contains 0.5 to 2% of the acidic catalyst.

9. Process to claim 5 c**haracterized in that** the acidic catalyst is an acid such as nitric acid, sulphuric acid, hydrochloric acid or/and toluene-p-sulphonic acid.

10. Process to claim 9 **characterized in that** the mixture, in relation to its total weight, contains 0.05 to 0.2% of the acidic catalyst.

11. Process to claim 5 **characterized in that** for the production of the hydrolyzed component the polyvinyl acetate is saponified to a hydrolysis degree of 20 to 70%.

12. Process to claim 11 **characterized in that** the polyvinyl acetate is saponified to a hydrolysis degree of 30 to 55%.

13. Process to claim 11 **characterized in that** an aqueous polyvinyl acetate dispersion is saponified with sodium hydroxide solution at 120-140 °C.

14. Process to claim 11 **characterized in that** the hydrolyzed component on polyvinyl acetate base is adjusted to a residual moisture content of 15-35%.

15. Process to claim 5 **characterized in that** the native starch, the hydrolyzed component on polyvinyl acetate base and the catalyst are mixtured to a freely flowing powder blend.

16. Process to claim 15 c**haracterized in that** circa 1% stearic acid are added to the powder blend, in relation to its total weight.

17. Process to claim 15 **characterized in that** circa 1% precipitated silicic acid are added to the powder blend, in relation to its total weight.

18. Process to claim 11 **characterized in that** the catalyst mixed with the glycerol is metered in liquid state.

19. Use of a thermoplastic polymer blend to any of the claims 1 to 18 for the production of injection-moulded, thermoformed or blow-moulded components, foils or fiber row materials as well as materials for melt coatings.

## Revendications

1. Mélange de polymères thermoplastiques comprenant une structure de phase bicontinue, constitué d'amidon thermoplastique, d'au moins un polymère synthétique et d'un composant d'hydrolyse à base de PVAc, pouvant être obtenu par extrusion réactive d'un mélange d'amidon natif et d'au moins un polymère hydrophobe, sous l'addition d'un composant hydrolysé à base de polyvinylacétate et d'éthylèneglycol, de propylèneglycol, de glycérol, de 1,3-butanediol et/ou d'eau en présence d'un catalyseur acide.

2. Mélange de polymères thermoplastiques selon la revendication 1, **caractérisé en ce qu'**il comprend en outre des agents diluants, des matières de charges, des agents lubrifiants, des agents fluidifiants, un colorant, des pigments, ou des mélanges de ceux-i.

3. Mélange de polymères thermoplastiques selon la revendication 1 ou 2, **caractérisé en ce qu'**il comprend, rapporté à l'ensemble de la composition, 30 à 70 % en poids d'amidon thermoplastique, 20 à 40 % en poids de polymère synthétique et 6 à 25 % en poids de composant d'hydrolyse à base de PVAc, et éventuellement un composant catalyseur acide.

4. Mélange de polymères thermoplastiques selon la revendication 1, dans lequel le polymère synthétique est un polyester aliphatique biodégradable ou ses copolymères, ou du polyvinylacétate ou ses copolymères, ou un dérivé d'amidon résistant à l'eau ou un dérivé de cellulose, ou un alcool de polyvinyle ou ses copolymères, ou un dérivé d'amidon ou de cellulose résistant à l'eau.

5. Procédé de préparation d'un mélange de polymères thermoplastiques par extrusion réactive d'un mélange d'amidon natif et d'au moins un polymère hydrophobe, sous l'addition d'un composant hydrolysé à base de polyvinylacétate et d'éthylèneglycol, de propylèneglycol, de glycérol, de 1,3-butanediol et/ou d'eau, **caractérisé en ce que** le mélange est extrudé en présence d'un catalyseur acide.

6. Procédé selon la revendication 5, **caractérisé en ce que** le catalyseur acide est un composé organométallique tel que l'oxyde de dibutylétain, le dilaurate de dibutylétain, le titanate de tétra-2-éthylhexyle, le zirconate de triéthanolamine, un composé titanate chélaté à l'acide lactique, le titanate de triéthanolamine et/ou le titanate d'alkyle.

7. Procédé selon la revendication 5, **caractérisé en ce que** le catalyseur acide est un acide de Lewis (tel que le phosphite de triphényle, par exemple).

8. Procédé selon la revendication 6 ou 7, **caractérisé en ce que** le mélange, rapporté à son poids total, comprend 0,5 à 2 % du catalyseur acide.

9. Procédé selon la revendication 5, **caractérisé en ce que** le catalyseur acide est un acide, tel que l'acide nitrique, l'acide sulfurique, l'acide chlorhydrique et/ou l'acide p-toluènesulfonique.

10. Procédé selon la revendication 9, **caractérisé en ce que** le mélange, rapporté à son poids total, comprend 0,05 à 0,2 % du catalyseur acide.

11. Procédé selon la revendication 5, **caractérisé en ce que** pour produire le composant hydrolysé le polyvinylacétate est saponifié à un degré d'hydrolyse de 20 à 70%.

12. Procédé selon la revendication 11, **caractérisé en ce que** le polyvinylacétate est saponifié à un degré d'hydrolyse de 30 à 55 %.

13. Procédé selon la revendication 11, **caractérisé en ce qu'**une dispersion aqueuse à base de polyvinylacétate est saponifiée avec une lessive de soude à une température comprise entre 120 et 140 °C.

14. Procédé selon la revendication 11, **caractérisé en ce que** la teneur en humidité résiduelle du composant hydrolysé à base de polyvinylacétate est ajustée entre 15 et 35%.

15. Procédé selon la revendication 5, **caractérisé en ce que** l'amidon natif, le composant hydrolysé à base de polyvinylacétate et le catalyseur sont homogénéisés en un mélange pulvérulent s'écoulant bien.

16. Procédé selon la revendication 15, **caractérisé en ce que** l'on ajoute environ 1 % d'acide stéarique au mélange pulvérulent, rapporté à son poids total.

17. Procédé selon la revendication 15, **caractérisé en ce que** l'on ajoute environ 1 % d'acide silicique précipité au mélange pulvérulent, rapporté à son poids total.

18. Procédé selon la revendication 11, **caractérisé en ce que** le catalyseur mélangé à la glycérine est dosé à l'état liquide.

19. Utilisation d'un mélange de polymères thermoplastiques selon l'une quelconque des revendications 1 à 18 pour produire des pièces moulées par injection, des pièces obtenues par emboutissage profond ou thermoformage ou des articles moulés par soufflage, des feuilles ou des matières fibreuses brutes, et en tant que matériau destiné à des revêtements de matières en fusion ou fonte.
